# EUROPÄISCHE PATENTANMELDUNG

(11) **EP 4 810 247 A1**
(43) Veröffentlichungstag der Anmeldung: **23.09.2026**
(21) Anmeldenummer: 25164705.3
(22) Anmeldetag: 19.03.2025
(51) Int. Cl.: B32B 7/12, B32B 15/20, B32B 27/08, B32B 27/16, B32B 27/30, B32B 27/32, B32B 27/34

(54) **LEBENSMITTELFOLIE**

(71) Anmelder: Constantia Teich GmbH, 3205 Weinburg (AT)
(72) Erfinder: Daum, Helwig, 34628 Willingshausen (DE); Buchinger, Georg, 3508 Paudorf (AT)
(74) Vertreter: Babeluk Patentanwälte GmbH

(57) **Zusammenfassung**

Die Erfindung betrifft eine Verbundfolie, für den Lebensmittel- und Pet-Food-Bereich. Sie umfasst einen ersten Layer aus Aluminium (106), einen auf dem Aluminium aufgebrachten Passivierungslayer (105), einen Kleberlayer eines aromatfreien aliphatischen Klebers aus PU Isocyanat mit Härter (104), sowie eine Kunststofffolie (20) umfassend zumindest einen Polypropylenlayer (101a,b), zumindest einen Barrierelayer (103) mit einer Temperaturbeständigkeit von zumindest 134°C, und zumindest einen Haftvermittlerlayer (102a,b), wobei die Kunststofffolie (20) an den Kleberlayer (104) grenzt.

## Beschreibung

Die Erfindung betrifft eine Verbundfolie aus Aluminium und Polypropylen entsprechend Anspruch 1, für den Lebensmittel- und Pet-Food-Bereich.

Der Bereich der Lebensmittelverpackungen und der Pet-Food-Bereich sind ständigen Weiterentwicklungen unterworfen. Diese ergeben sich einerseits aufgrund laufend strengerer Umweltstandards, andererseits aufgrund laufend neuer Erkenntnisse betreffend mögliche gesundheitliche Gefahren von Additiven und deren Reaktionsprodukten. Typische Beispiele für die Motivation zur Innovation liegen in erhöhten Anforderungen an die Haltbarkeit der verpackten Produkte (shelf life) und im laufenden Bestreben den CO²-Fußabdruck der Endprodukte zu reduzieren.

Insbesondere die Reduktion des CO²-Fußabdrucks unterliegt häufig einem Zielkonflikt mit der Erhöhung des shelf lifes der hergestellten Produkte. Dies gilt nicht nur für den Prozess der Herstellung, sondern auch für den nachfolgenden Transport. Schalen, die aus geformten Blechen hergestellt werden verfügen beispielsweise über eine höhere mechanische Festigkeit und häufig eine höhere shelf life, gleichzeitig besitzen diese Produkte aber ein höheres Gewicht und nehmen im Transport mehr Platz in Anspruch als das beispielsweise Lebensmittel-Pouches tun. Umrüstvorgänge in der Produktion sind jedoch aufwändig, was einen hohen Zeitverlust bedeuten kann und dadurch mit hohen Kosten verbunden ist.

Neben den Problemen der Logistik und Produktionsplanung sind Trocknungsprozesse ein großer Treiber der CO²-Emissionen in der Verpackungsherstellung. Diese ergeben sich beispielsweise aus der Verwendung von lösungsmittelhaltigen Aliphaten als Kleber, die bei hohen Temperaturen in einem Trocknungstunnel/Brückentrockner behandelt werden. Als Steamerprozesse werden thermische Verfahren bezeichnet, bei denen Lebensmittel unter Einwirkung von Sattdampf bei Temperaturen zwischen 100 °C und 130 °C haltbar gemacht werden. Lösungsmittelhaltige Klebstoffe auf Basis aliphatischer Polyurethane bieten eine gute Beständigkeit gegen hohe Temperaturen, wie sie in Steamerprozessen auftreten. Aliphatische Polyurethane sind dafür bekannt, dass im Gegensatz zu ihren aromatischen Gegenstücke keine PAAs abgespalten werden. Durch die hohen Temperaturen entstehen jedoch neben den Kosten für das Aufheizen auch cyclische Aromate, die besonders abgeschieden werden müssen. Als Abfallprodukt wird Wasserdampf und CO² abgeschieden.

Es besteht daher Bedarf an einer Verpackung für den Lebensmittel- und Pet-Food Bereich, die in hoher Quantität, möglichst kosteneffizient herstellbar ist und gleichzeitig einen reduzierten CO² Fußabdruck aufweist.

Erfindungsgemäß geschieht dies durch eine Verbundfolie für den Lebensmittel- und Pet-Food-Bereich, umfassend eine erste Schicht aus Aluminium, eine Passivierungsschicht umfassend Zirkonium, Titan, oder Chrom3, oder eine Mischung daraus, eine Schicht eines aromatfreien aliphatischen Klebers aus PU Isocyanat mit Härter, zumindest eine Barriereschicht mit einer Temperaturbeständigkeit von zumindest 130°C und zumindest eine Schicht Polypropylen.

Die Basis für die Verbundfolie bildet ein Aluminiumband. Dieses Aluminiumband kann aus unterschiedlichen Aluminiumlegierungen bestehen, die der Fachperson aus dem Bereich der Lebensmittelverpackungen und dem Pet-Food-Bereich bekannt sind. Ein Beispiel für eine verwendete Legierung ist 3105A. Dabei handelt es sich um die unedelste, "schlechteste", Legierung, die die geringsten Verbundkräfte aufweist. Edlere Legierungen wie etwa 8XXX weisen höhere Verbundkräfte auf. Die Fachperson ist in Anbetracht der Erfindung und ihres Fachwissens leicht dazu in der Lage passende Legierungen auszuwählen. Die Aluminiumbänder können unterschiedliche Gefügeanordnungen aufweisen. Die Gefügeanordnungen können in bekannter Weise an das Anforderungsprofil des Anwendungsfalls angepasst werden. Das Aluband weist eine Stärke von 6-200 µm, bevorzugt eine Stärke von 50-100 µm auf.

Das Aluminiumband wird in einem ersten Schritt einer Coronabehandlung unterzogen. Dadurch wird sichergestellt, dass mögliche Ölrückstände von dem Aluminiumband entfernt werden und die Oberfläche des Aluminiumbandes in metallischer Reinheit vorliegt, wodurch die Verankerung des Substrates (die Passivierungsschicht) verbessert wird. Unter Reinheit im Sinne dieser Anmeldung wird eine möglichst geringe Oberflächenspannung des Aluminiumbandes iSd DIN ISO 8296:2003 verstanden.

Im nächsten Schritt erfolgt eine Passivierung durch einen nasschemischen Prozess. Hierbei werden Zirkonium, Titan, Chrom3, oder eine Mischung dieser Materialien, in einer Menge von 10-50 mg/m², bevorzugt 20-30 mg/m², auf das coronabehandelte Aluminiumband aufgetragen. Zum Auftrag der Passivierungsemulsion/Lösung kann mit unterschiedlichen Auftragsprozessen gearbeitet werden. Es können sowohl Druckverfahren wie auch Sprühverfahren dazu verwendet werden. Bevorzugt erfolgt die Aufbringung durch rotative Tröpfchenaufbringung mit nachgeschalteter Glättwalze. Diese kann sowohl im Gleichlauf, als auch im Gegenlauf betrieben werden. Vorteilhaft an dieser Methode des Auftragens ist insbesondere die Vermeidung von Aerosolen und Partikeln, sowie die Realisierung eines sehr gleichmäßigen Auftrags. Der PH-Wert des zur Passivierung verwendeten Substrates beträgt 1-1,5. Nach der Passivierung liegt ein positives Aluminium vor, wodurch das Zirkonium, Titan, Chrom3, oder die verwendete Mischung dieser Materialien, vom Aluminium angezogen werden.

Das Aluminiumband wird mit einer Folie verbunden, die zu einem großen Teil aus Polypropylen (PP) besteht. Zum Verbinden wird ein Polyurethan (PU) Isocyanat mit einem Härter (z.B. MORCHEM PL 292 A + CF-892) verwendet. Dabei handelt es sich um einen aliphatischen 2-Komponenten-Kleber, der frei von Aromaten ist und keine Lösungsmittel benötigt, also zu 100% aus Feststoff besteht. Vorteilhaft an dieser Kombination ist, dass kein Trocknungsprozeß für den Kleber benötigt wird. Dadurch lässt sich eine erhebliche CO²- und Energieeinsparung realisieren und es werden keine primären aromatischen Amine (PAA) abgegeben. Nachgeschaltete Prozesse wie Lösemittelaufbereitung oder Vernichtung sind nicht erforderlich, da die aufgebrachten Grammaturen netto/netto sind. Der lösungsmittelfreie Kleber wird in Grammaturen von 1-3 g/m² appliziert, bevorzugt von 1,5-2,5 g/m². Aufgetragen wird der Kleber in standardmäßigen Kaschiermaschinen mit erhöhten Zugkräften. Die Zugkräfte ergeben sich durch den auftretenden Rollendruck. Bevorzugt erfolgt das Auftragen des Klebers auf das Aluminiumband, wobei der Bahnzug zumindest 500N, bevorzugt zumindest 2 kN beträgt. Alternativ ließe sich der Kleber auch auf die Kunststofffolie aufbringen, was jedoch aufgrund des niedrigeren Bahnzugs von 30-100N nachteilig ist.

Durch den hohen Rollendruck setzt eine Verflächigung des hochviskosen Klebers ein. Die anschließende Aushärtung geschieht nach Herstellerangaben, wobei üblicherweise erst nach 36h Tackiness gegeben ist. Bei Klebstoffen ist Tackiness entscheidend für die Anfangshaftung. Ein Klebstoff mit hoher Tackiness haftet schnell und zuverlässig auf der Oberfläche. Hier ist die ISO 11339 relevant. Diese Norm beschreibt ein Verfahren zur Bestimmung der Klebrigkeit von Klebstoffen. Die endgültige Aushärtung des Materials in dem Sinne, dass es gemäß VO (EU) 10/2011 zur weiteren Verwendung freigegeben wird, liegt üblicherweise erst nach 7-10 Tagen tempern bei 35°C vor. Die Limitierung liegt damit primär in der rechtlichen Regulierung bezogen auf Migrationsstoffe und kann bei unterschiedlichen Klebern variieren.

Die Kunststofffolie, mit der das Aluband über den Kleber verbunden ist, besteht zum größten Teil üblicherweise aus Polypropylen. Eine Polypropylenschicht kann 3 und mehr Lagen aufweisen, bevorzugt weist die Schicht 5-9 Lagen auf, wobei diese Lagen bevorzugt im Coex-Extrusionsverfahren hergestellt werden (Cast Polypropylen, Blown PP oder Extrusionskaschierung). Die einzelnen PP-Lagen weisen untereinander eine natürliche Haftung auf und bilden so eine PP-Folie. Weiters kann die Kunststofffolie auch ein Verbund aus mehreren einzelnen PP-Folien (Schichten) sein, die miteinander verbunden sind. Besonders bevorzugt weisen verwendete PP-Folien einen Melt-Flow-Index (MFI) von <4 gemäß ISO 1133 auf.

Die Kunststofffolie umfasst weiter eine Barriere gegenüber Migrationsstoffen, welche aus dem verpackten Produkt (innen), über die PP-Seite in die Verbundfolie hinein migrieren. Solche Migrationsstoffe sind problematisch für die Beständigkeit des Verbundes, insbesondere wenn diese Stoffe durch das PP in den Kleber hinein migrieren. So können etwa Fette, die in den verpackten Produkten, insbesondere Lebensmitteln, enthalten sind, mit dem Kleber reagieren und die chemische Bindung zwischen dem Aluband und der PP-Folie schwächen. Im Extremfall kommt es zu einem vollständigen Lösen des Klebers, wodurch sich die innere Kunststofffolie als Beutel aus dem umgebenden Alu-Pouch ziehen lässt (Bag-in-Box-Effekt). Um das zu verhindern kommen innerhalb der Kunststofffolie polare Materialien zum Einsatz, welche die Migration zum Kleber verhindern. Beispiele für geeignete Barrierelayer umfassen PA (z.B. PA 6.6), PET, COC, HDPE, EVOH, PVOH oder vergleichbare Materialien. Bevorzugt kommt ein Barrierelayer zum Einsatz, welcher eine Temperaturbeständigkeit von zumindest 134°C aufweist, besonders bevorzugt von zumindest 140°C. Unter Temperaturbeständigkeit wird in diesem Zusammenhang verstanden, dass das Material nach erfolgter Vernetzung stabil bleibt und kein Übergang zur Glasphase mehr stattfindet. Insbesondere wird bevorzugt EVOH als Barrierelayer verwendet. Besonders bevorzugt weist das EVOH darüber hinaus einen Ethylenanteil von zumindest 29% auf. Für das Aufbringen des Barrierelayers auf der PP-Folie wird ein Haftvermittler verwendet, wie er der Fachperson bekannt ist.

Die Kunststofffolie wird in der Fertigung der Verbundfolie unmittelbar nach dem Aufbringen des Klebers auf das Aluband, auf den Kleber aufgebracht. Der Nachteil liegt hier darin, dass Tackiness, wie oben beschrieben, erst nach etwa 36 h eintritt. Insbesondere zu Beginn liegt damit ein "schwimmendes System" zweier Folien vor, die eine vorsichtige Handhabung der Folien verlangen.

Eine fertige Kunststofffolie zur Verwendung für eine erfindungsgemäße Verbundfolie besteht aus zumindest drei Schichten. Diese sind eine PP-Folie, die aus einzelnen PP-Lagen bestehen, welche untereinander eine natürliche Haftung aufweisen, eine Haftvermittlerschicht, die beispielsweise aus einem Copolymer von Polypropylen (Co-PP) und Maleinsäureanhydrid besteht (Co-PP malinsäure-Anhidrid-Kleber) gebildet wird und einer Barriereschicht. Eine besonders bevorzugte Ausführungsform umfasst zusätzlich eine weitere Haftvermittlerschicht (Co-PP malinsäure-Anhidrid-Kleber) und eine weitere PP-Folie, die so angeordnet sind, dass sich die Barriereschicht in der Mitte zwischen den PP-Layern befindet.

Die Erfindung wird beispielhafte an den Figuren erklärt, dabei zeigt die
Fig. 1 den Grundaufbau der erfindungsgemäßen Verbundfolien,
Fig. 2 eine bevorzugte Ausgestaltung der erfindungsgemäßen Verbundfolie und
Fig. 3 eine weitere bevorzugte Ausgestaltung der erfindungsgemäßen Verbundfolie.

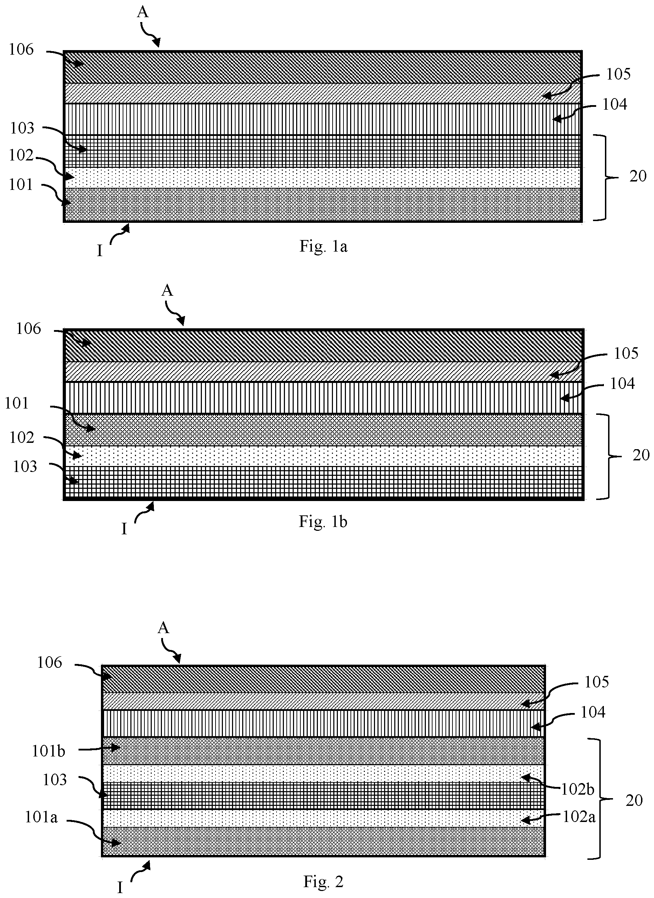

Fig. 1 zeigt den Grundaufbau der erfindungsgemäßen Verbundfolien mit einer Unterseite L und einer Oberseite U umfassend eine PP-Folie 101, eine Haftvermittlerschicht 102, einen Barrierelayer 103, eine Kleberschicht 104 eines lösungsmittelfreien Zweikomponenten-Klebers, eine Passivierungsschicht 105 (Zirkonium, Titan, Chrom3, oder eine Mischung dieser Materialien) und eine Aluminiumschicht 106. Dabei werden das passivierte Aluminium (105, 106) und die Kunststofffolie 20 (bestehend aus der PP-Folie 101, der Haftvermittlerschicht 102 und dem Barrierelayer 103) wie oben beschrieben separat voneinander hergestellt und anschließend durch die Kleberschicht 104 miteinander verbunden. Das Auftragen der Kleberschicht 104 erfolgt dabei wie weiter oben beschrieben. Fig. 1a zeigt dabei eine Ausführungsform, bei der sich die PP-Folie 101 auf der Unterseite der Verbundfolie befindet und der Barrierelayer 103 zur Kleberschicht 104 gewandt ist, während Fig. 1b eine Ausführungsform zeigt, bei der sich der Barrierelayer 103 auf der Unterseite der Verbundfolie befindet und die PP-Folie 101 zur Kleberschicht 104 gewandt ist. Die Haftvermittlerschicht 102 befindet sich in beiden Ausführungsformen zwischen der PP-Folie 101 und dem Barrierelayer 103. Die Unterseite L ist im Rahmen dieser Anmeldung als die Seite zu verstehen ist, die sich üblicherweise im fertigen Produkt auf der Innenseite befindet, also dem späteren Packgut (z.B. Lebensmittel oder Tiernahrung) zugewandt ist, und die Oberseite U als die Seite, die sich üblicherweise später im fertigen Produkt auf der Außenseite befindet, also der Atmosphäre zugewandt ist.

Fig. 2 zeigt eine bevorzugte Ausführung der erfindungsgemäßen Verbundfolien, die eine Erweiterung des Systems von Fig. 1 darstellt, umfassend (von unten nach oben) eine erste PP-Folie 101a, eine erste Haftvermittlerschicht 102a, einen Barrierelayer 103, eine zweite Haftvermittlerschicht 102b, eine zweite PP-Folie 101b, eine Kleberschicht 104 eines lösungsmittelfreien Zweikomponenten-Klebers, eine Passivierungsschicht 105 (Zirkonium, Titan, Chrom3, oder eine Mischung dieser Materialien) und eine Aluminiumschicht 106. Dabei werden das passivierte Aluminium (105, 106) und die Kunststofffolie 20 (bestehend aus der ersten PP-Folie 101a, der ersten Haftvermittlerschicht 102a, dem Barrierelayer 103, der zweiten Haftvermittlerschicht 102b, und der zweiten PP-Folie 101b) separat voneinander hergestellt und anschließend durch die Kleberschicht 104 miteinander verbunden. Das Auftragen der Kleberschicht 104 erfolgt dabei wie weiter oben beschrieben. Das gezeigte Sandwich-System der Kunststofffolie 20 kann an der Unterseite noch um weitere Barrierelayer und PP-Schichten erweitert werden. Die in Fig. 2 dargestellte fünfschichtige Ausgestaltung stellt jedoch eine besonders bevorzugte Ausführungsform dar, da es einen guten Schutz des Barrierelayer 103 ermöglicht, ohne dass die Kunststofffolie 20 in der Herstellung zu kompliziert wird. Sowohl die Kuststofffolie 20, als auch die fertige Verbundfolie sind damit sehr einfach und kosteneffizient herstellbar.

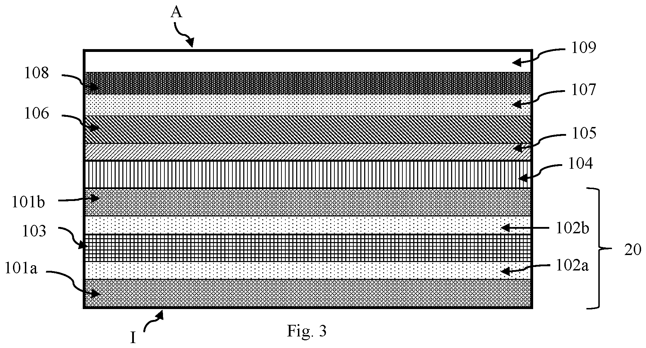

Fig. 3 zeigt eine weitere bevorzugte Ausführung der erfindungsgemäßen Verbundfolien, die eine Erweiterung der Fig. 2 darstellt, umfassend (von unten nach oben) eine erste PP-Folie 101a, eine erste Haftvermittlerschicht 102a, einen Barrierelayer 103, eine zweite Haftvermittlerschicht 102b, eine zweite PP-Folie 101b, eine Kleberschicht 104 eines lösungsmittelfreien Zweikomponenten-Klebers, einer Passivierungsschicht 105 (Zirkonium, Titan, Chrom3, oder eine Mischung dieser Materialien), eine Aluminiumschicht 106, einen Primer (Vorlack) 107, eine Farbschicht 108 (z.B. Motivdruck) und einen Überlack 109 (häufig in Form eines Zweikomponenten Lacks). Dabei werden das passivierte Aluminium (105, 106) und die Kunststofffolie 20 (bestehend aus der ersten PP-Folie 101a, der ersten Haftvermittlerschicht 102a, dem Barrierelayer 103, der zweiten Haftvermittlerschicht 102b, und der zweiten PP-Folie 101b) separat voneinander hergestellt und anschließend durch die Kleberschicht 104 mit einander verbunden. Das Auftragen der Kleberschicht 104 erfolgt dabei wie weiter oben beschrieben. Das Aufbringen des Primers 107, der Farbschicht 108 und des Überlacks 109 kann entweder vor oder auch nach dem Verbinden des passivierten Aluminiums (105, 106) mit der Kunststofffolie 20 erfolgen.

Die Kunststofffolie 20 muss dabei, wie beschrieben, nicht aus den dargestellten fünf Schichten bestehen. Denkbar sind auch Anordnungen, bei denen die Kunststofffolie aus zehn oder zwanzig Schichten besteht, wobei weitere Schichten durch Anbringen von zusätzlichem Haftvermittler 102 und PP-Folie 101 sowohl mit als auch ohne weiteren Barrierelayern 103 erfolgen kann. Wichtig ist bei einer Erweiterung der Ausführungsformen aus Fig. 2 und Fig. 3, dass zumindest eine Schicht des Barrierelayers 103 innerhalb der Kunststofffolie 20 vorhanden ist, der die Kleberschicht 104 im verpackten Zustand gegenüber dem innenliegenden Füllgut abschirmt.

Ein großer Vorteil, der sich, neben der CO²-Reduktion und der Kosten- und Energieeinsparungen, durch die erfindungsgemäße Verbundfolie ergibt, liegt in der deutlichen Reduktion an Kleberverbrauch. Dieser liegt, wie bereits beschrieben, lediglich bei etwa 2 g/m² im Gegensatz zu zumindest dem Doppelten bei lösungsmittelbasierten Systemen. Ein weiterer großer Vorteil liegt in der Lösungsmittelfreiheit des Klebstoffs, da dadurch die Fertigungssicherheit deutlich erleichtert wird. Darüber hinaus ermöglicht es der erfindungsgemäße Aufbau die Wandstärke der PP-Folien zu reduzieren.

Ein Beispiel für einen geeigneten Zweikomponenten-Kleber ist MORCHEM PL 292 A mit dem Härter CF-892, die folgende Eigenschaften aufweisen:

**Tabelle 1**

| Eigenschaft | MORCHEM PL 292 A | MORCHEM CF-892 |
|---|---|---|
| Festkörpergehalt | 100 % | 100% |
| Brookfield Viskosität (60 °C) | 5.500 ± 2.000 mPa.s | 3.100 ± 1.000 mPa.s |
| Dichte (23 °C) | 1,23 ± 0,03 g/cm3 | 1,16 ± 0,02 g/cm3 |
| Aussehen | Transparent | Transparent |
| Funktionalität | -OH | -NCO |
| Mischungsverhältnis | 100 | 60 |

**Tabelle 2**

| | |
|---|---|
| Dosier Maschinentemperatur (A) | 55-65 °C |
| Dosier Maschinentemperatur (C) | 35-45 °C |
| Beschichtungsstärke | 1,2 - 3,0 g/m2 |
| Auftragstemperatur | 50-70 °C |
| Walzentemperatur | 35-70 °C |
| Verarbeitungszeit (60 °C) | 45 Minuten |

Die Dosier Maschinentemperatur (A) bezieht sich auf die Temperatur der Komponente A des Klebstoffs, MORCHEM PL 292 A, während der Dosierung. Die Dosier Maschinentemperatur (C) bezieht sich auf die Temperatur der Komponente C des Klebstoffs, MORCHEM CF-892, während der Dosierung.

### Bezugszeichenliste:

| | | | |
|---|---|---|---|
| 20 | Kunststofffolie | 104 | Kleberschicht (Kleberlayer) |
| 101 | PP-Folienlayer | 105 | Passivierungsschicht (Passivierungslayer) |
| 101a | erster PP-Folienlayer | | |
| 101b | zweiter PP-Folienlayer | 106 | Aluminiumlayer |
| 102 | Haftvermittlerlayer | 107 | Primer |
| 102a | erster Haftvermittlerlayer | 108 | Farbe |
| 102b | zweiter Haftvermittlerlayer | 109 | Überlack |
| 103 | Barrierelayer | | |

## Patentansprüche

1. Verbundfolie, für den Lebensmittel- und Pet-Food-Bereich, umfassend
a. einen ersten Layer aus Aluminium (106),
b. einen auf dem Aluminium aufgebrachten Passivierungslayer (105),
c. einen Kleberlayer eines aromatfreien aliphatischen Klebers aus PU Isocyanat mit Härter (104),
sowie eine Kunststofffolie (20) umfassend
d. zumindest einen Polypropylenlayer (101a,b),
e. zumindest einen Barrierelayer (103) mit einer Temperaturbeständigkeit von zumindest 134°C, und
f. zumindest einen Haftvermittlerlayer (102a,b),
wobei die Kunststofffolie (20) an den Kleberlayer (104) grenzt.

2. Verbundfolie gemäß Anspruch 1, **dadurch gekennzeichnet, dass** die Verbundfolie zumindest zwei Polypropylenlayer (101a,b) und zumindest zwei Haftvermittlerlayer (102a,b) umfasst, wobei die Kunststofffolie (20) auf beiden flächigen Seiten einen Polypropylenlayer (101a,b) aufweist, einer der Polypropylenlayer (101b) an den Kleberlayer (104) angrenzt und zwischen dem zumindest einen Barrierelayer (103) und den Polypropylenlayern (101a,b) die Haftvermittlerlayer (102a,b) angeordnet sind.

3. Verbundfolie gemäß Anspruch 1 oder 2, **dadurch gekennzeichnet, dass** der Passivierungslayer (105) Zirkonium, Titan, Chrom3, oder eine Mischung daraus umfasst, bevorzugt Chrom3.

4. Verbundfolie gemäß Anspruch 1 bis 3, **dadurch gekennzeichnet, dass** es sich bei dem Barrierelayer (103) um PA, PET, COC, HDPE, EVOH oder PVOH handelt, bevorzugt um EVOH handelt.

5. Verbundfolie gemäß einem der Ansprüche 1 bis 4, **dadurch gekennzeichnet, dass** das EVOH einen Ethylenanteil von zumindest 29% aufweist.

6. Verbundfolie gemäß einem der Ansprüche 1 bis 5, **dadurch gekennzeichnet, dass** der Barrierelayer (103) eine Temperaturbeständigkeit von zumindest 140°C aufweist.

7. Verbundfolie gemäß einem der Ansprüche 1 bis 6, **dadurch gekennzeichnet, dass** zumindest einer der Polypropylenlayern (101a,b) Cast Polypropylen umfasst.

8. Verbundfolie gemäß einem der Ansprüche 1 bis 7, **dadurch gekennzeichnet, dass** zumindest einer der Polypropylenlayern (101a,b) zumindest 3, bevorzugt aus 5-9 Schichten umfasst.

9. Verbundfolie gemäß einem der Ansprüche 1 bis 8, **dadurch gekennzeichnet, dass** zumindest einer der Polypropylenlayern (101a,b) einen Melt-Flow-Index (MFI) von <4 gemäß ISO 1133 aufweist.

10. Verbundfolie gemäß einem der Ansprüche 1 bis 9, **dadurch gekennzeichnet, dass** die Grammatur des Kleberlayer (104) 1-3 g/m² beträgt, bevorzugt von 1,5-2,5 g/m².

11. Verbundfolie gemäß einem der Ansprüche 1 bis 10, **dadurch gekennzeichnet, dass** die zumindest zwei Haftvermittlerlayer (102a,b) aus einem Copolymer von Polypropylen und Maleinsäureanhydrid bestehen.

12. Verbundfolie gemäß einem der Ansprüche 1 bis 11, **dadurch gekennzeichnet, dass** der Aluminiumlayer (106) einer Coronabehandlung unterzogen wurde.

13. Verbundfolie gemäß einem der Ansprüche 1 bis 12, **dadurch gekennzeichnet, dass** der Aluminiumlayer (106) auf der dem Passivierungslayer (105) gegenüberliegenden Seite einen Primer (107) aufweist, auf dem ein Farblayer (108) und bevorzugt zusätzlich ein Überlack (109) aufgebracht sind.

14. Verfahren zur Herstellung einer Verbundfolie gemäß einem der Ansprüche 1 bis 13, **dadurch gekennzeichnet, dass** der Bahnzug bei Aufbringen des Kleberlayers (104) zumindest 500N, bevorzugt zumindest 2 kN beträgt.

15. Verwendung einer Verbundfolie gemäß einem der Ansprüche 1 bis 13 für die Pouches für den Lebensmittel- oder Pet-Food-Bereich.
